# EUROPÄISCHE PATENTANMELDUNG

(11) **EP 1 990 695 A1**
(43) Veröffentlichungstag der Anmeldung: **12.11.2008**
(21) Anmeldenummer: 07009342.2
(22) Anmeldetag: 09.05.2007
(51) Int. Cl.: G05B 19/042

(54) **Automatisierungsgerät und Verfahren zu dessen Betrieb**

(71) Anmelder: SIEMENS AKTIENGESELLSCHAFT, 80333 München (DE)
(72) Erfinder: Graw, Roland, 76479 Steinmauern (DE)

(57) **Zusammenfassung**

Es wird ein Automatisierungsgerät mit einer Verarbeitungseinheit (20), einem Speicher (12), einem in dem Speicher (12) vorgehaltenen und durch die Verarbeitungseinheit (20) ausführbaren Betriebssystem (14) und einer in den Speicher (12) ladbaren, ebenfalls durch die Verarbeitungseinheit (20) ausführbaren Automatisierungslösung (16) sowie ein korrespondierendes Verfahren zu dessen Betrieb angegeben, wobei eine Ausführung der Automatisierungslösung (16) je nach davon umfassten Programmcodeanweisungen einen Aufruf einzelner Funktionalitäten des Betriebssystems (14) umfasst und wobei dem Betriebssystem (14) integrierte, aktivierbare Testfunktionalitäten (24, 26, 28) zugeordnet sind.

## Beschreibung

Die Erfindung betrifft ein Automatisierungsgerät, wie z. B. eine speicherprogrammierbare Steuerung oder dergleichen, sowie ferner ein Verfahren zum Betrieb eines solchen Automatisierungsgeräts.

Gattungsgemäße Automatisierungsgeräte sind an sich bekannt. Beispielhaft wird auf die von der Anmelderin unter der Marke SIMATIC angebotenen Automatisierungsgeräte verwiesen.

Beim Betrieb solcher Automatisierungsgeräte erfolgt unter deren Kontrolle, genauer unter Kontrolle einer auf dem Automatisierungsgerät implementierten und in Software realisierten Automatisierungslösung, also einem Anwenderprogramm oder einer Kollektion von Anwenderprogrammen, eine Steuerung und/oder Überwachung eines technischen Prozesses. Dabei hat sich herausgestellt, dass eine etwaige Fehlersuche zu kostenträchtigen und damit unerwünschten Stillstandszeiten des jeweiligen technischen Prozesses führt. Optimierungen der oben genannten Automatisierungsgeräte betreffen damit häufig auch zunehmend verbesserte Möglichkeiten für eine Fehlersuche. Bei einer solchen Fehlersuche sind üblicherweise Funktionalitäten eines auf dem Automatisierungsgerät implementierten Betriebssystems nicht erreichbar. Dies ist zum einen dadurch begründet, dass irrtümliche oder fehlerhafte Eingriffe in das Betriebssystem zu unvorhergesehenen Reaktionen führen können. Zum anderen sind im Betriebssystem auch Erkenntnisse realisiert, die dem geschützten Know-how des jeweiligen Automatisierungsgeräteherstellers zuzurechnen sind.

Vor dem Hintergrund, dass bei in Betrieb befindlichen Anlagen eine Ursachenermittlung vor Ort meist nicht möglich ist, da der Produktivbetrieb aufrecht erhalten werden muss und aus Produkthaftungs- oder sonstigen Gründen nur die freigegebene, zertifizierte oder sonst wie zugelassene Betriebssystemversion verwendet werden darf. Entsprechend werden mitunter folgende zeit- und kostenintensive Ansätze verfolgt: Aufbau so genannter Schattenanlage(n); Erstellen von Sonder-Generierung(en) eines Betriebssystems mit auf die Fehlersituation zugeschnittener Testfunktionalität (interaktiver Prozess); theoretische Ermittlung von Fehlerursachen durch Speicherabzüge, Codeanalyse, Debug-Umgebung etc. Alle vorbeschriebenen "Alternativen" sind ausgesprochen zeitintensiv und insbesondere mit einem erheblichen Wartungsaufwand verbunden.

Eine Aufgabe der Erfindung besteht entsprechend darin, bei Vermeidung oder zumindest Reduzierung der oben skizzierten Nachteile bei einem Automatisierungsgerät Möglichkeiten zur Fehlersuche ohne die Gefahr unvorhergesehener Reaktionen auf das Betriebssystem derart auszudehnen, dass dieses weiterhin hinsichtlich Integrität und Know-how-Schutz eine von der Automatisierungslösung und/oder evtl. Fehlersuchprogrammen (Debugger) unabhängige Einheit bleibt.

Diese Aufgabe wird erfindungsgemäß mit den Merkmalen des Anspruchs 1 gelöst. Dazu ist bei einem Automatisierungsgerät mit einer Verarbeitungseinheit, einem Speicher, einem in dem Speicher vorgehaltenen und durch die Verarbeitungseinheit ausführbaren Betriebssystem und einer in den Speicher ladbaren, ebenfalls durch die Verarbeitungseinheit ausführbaren Automatisierungslösung, wobei eine Ausführung der Automatisierungslösung je nach davon umfassten Programmcodeanweisungen einen Aufruf einzelner Funktionalitäten des Betriebssystems umfasst, vorgesehen, dass dem Betriebssystem integrierte, aktivierbare Testfunktionalitäten zugeordnet sind.

Die in das Betriebssystem integrierten, aktivierbaren Testfunktionalitäten ermöglichen entsprechend der oben genannten Aufgabenstellung eine Ausdehnung von Möglichkeiten zur Wartung oder Fehlersuche unter den oben skizzierten Randbedingungen auch auf das Betriebssystem. Die Testfunktionalitäten sind integraler Bestandteil des Betriebssystems. Sie werden damit im Zusammenhang mit einer Erstentwicklung oder Weiterentwicklungen des Betriebssystems getestet und erst nach erfolgreichem Absolvieren jeweils vorgeschriebener Testphasen, ggf. amtlicher Zertifizierungen, freigegeben. Eine bedarfsweise Aktivierung einer vom Betriebssystem bereits umfassten Testfunktionalität ändert insoweit - anders als z. B. eine freiprogrammierbare Testroutine, die sich Zugang zum Betriebssystem verschafft - weder die Grundfunktionalität des Betriebssystems, noch kommt es zu einem Betrieb des Automatisierungsgeräts oder des davon gesteuerten technischen Prozesses außerhalb erteilter Genehmigungen oder Zertifizierungen. Durch die Möglichkeit, einzelne Testfunktionalitäten bedarfsweise aktivieren zu können, werden damit unvermeidlich einhergehende zusätzliche Belastungen verfügbarer Ressourcen des Automatisierungsgerätes, z. B. im Hinblick auf Verarbeitungsgeschwindigkeit (Rechenleistung) und Speicherkapazität, auf ein Minimum reduziert.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombinationen zu beanspruchen.

Vorteilhafte Ausgestaltungen der Erfindung sind Gegenstand von Unteransprüchen. Dabei verwendete Rückbeziehungen weisen auf die weitere Ausbildung des Gegenstandes eines unabhängigen Anspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Gemäß einer bevorzugten Ausführungsform ist vorgesehen, dass dem Betriebssystem ein Systemdatenspeicher mit Systemdaten zugeordnet ist und dass eine Ausführung einer Testfunktionalität und/oder sonstiger Funktionalitäten des Betriebssystems in diesen, also den Test- oder sonstigen Betriebssystemfunktionalitäten jeweils zugeordneten Systemdaten protokollierbar ist. Der Systemdatenspeicher ist dabei bevorzugt im gleichen Speicher angelegt, in dem auch das Betriebssystem und/oder die Automatisierungslösung vorgehalten wird. Für den Fall, dass das Betriebssystem in einem nur für einen lesenden Zugriff zugänglichen Teil des Speichers vorgehalten wird, versteht sich von selbst, dass der Systemdatenspeicher in einem für einen Schreiblesezugriff zugänglichen Teil des Speichers vorgehalten wird. Der Begriff "Speicher" meint also hier und im Folgenden nicht ausschließlich einen Speicherbaustein oder dergleichen, sondern genauso den von der Verarbeitungseinheit des Automatisierungsgeräts adressierbaren Speicher. Die Verwendung dezidierter, hier als Systemdaten bezeichneter Daten für die Protokollierung ermöglicht zum einen deren globale Verwendung für sämtliche Funktionalitäten des Betriebssystems. Zum anderen liegen die Daten dann entsprechend der konkreten Implementation der Systemdaten, z. B. in Form eines so genannten Datenbausteins, also eines Systemdatenbausteins, in zusammengefasster Form vor, so dass z. B. auch eine Protokollierung der bei Ausführung von Testfunktionalitäten protokollierten Daten möglich wird.

Gemäß einer weiteren bevorzugten Ausführungsform ist vorgesehen, dass einzelne oder sämtliche Testfunktionalitäten über die Automatisierungslösung aktivierbar sind und dass protokollierte Systemdaten, insbesondere im Rahmen einer Ausführung aktivierter Testfunktionalitäten protokollierte Systemdaten, der Automatisierungslösung zumindest für einen lesenden Zugriff zugänglich sind. Im Zusammenhang mit einem Zugriff der Automatisierungslösung auf die Systemdaten ist deren Realisierung als globale Daten besonders günstig, da diese ohne zusätzliche Maßnahmen innerhalb der Automatisierungslösung zur Verfügung stehen. Mit einer Möglichkeit aus der Automatisierungslösung zumindest lesend auf bei Ausführung einer Testfunktionalität protokollierte Systemdaten zugreifen zu können, kann sich der Programmablauf innerhalb der Automatisierungslösung an evtl. Ausnahmesituationen im Bereich des Betriebssystems orientieren.

Weiter bevorzugt kann zusätzlich oder alternativ vorgesehen sein, dass in einem vom Speicher umfassten Anwenderspeicher Speicherbereiche gebildet oder bildbar sind, wobei zumindest ein derartiger Speicherbereich einer Testfunktionalität und/oder sonstigen Funktionalitäten des Betriebssystems zuordenbar ist und eine Ausführung einer Testfunktionalität und/oder sonstiger Funktionalitäten des Betriebssystems in den zugeordneten Speicherbereich protokollierbar ist. Der Vorteil der Verwendung von Speicherbereichen im Anwenderspeicher für die Protokollierung besteht darin, dass dieser vom Anwender bereitgestellt wird. Für besonders umfangreiche Protokollierungen kann der Anwender ggf. sogar eine Aufrüstung des Anwenderspeichers vorsehen, um zumindest einen ausreichend großen Speicherbereich im Anwenderspeicher der jeweiligen Testfunktionalität oder sonstigen Funktionalität des Betriebssystems zur Verfügung zu stellen. Auf diese Weise wird eine Verteuerung des Automatisierungsgerätes durch pauschale Bereitstellung eines größeren Speichers für evtl. spätere Protokollierungen vermieden. Außerdem kann eine evtl. Aufrüstung des Anwenderspeichers durch den Benutzer nach Abschluss der Wartung oder Fehlersuche, also im Zusammenhang mit einer abschließenden Deaktivierung etwaiger aktivierter Testfunktionalitäten, wieder auf die bisherige Größe reduziert werden. Schließlich ergibt sich als Vorteil der Verwendung von Speicherbereichen im Anwenderspeicher auch, dass der Anwender auf diesen in der Regel uneingeschränkt, d. h. lesend und schreibend, Zugriff hat und insofern eine besonders flexible Nutzung oder Auswertung von Ergebnissen der Protokollierung möglich ist.

Gemäß einer vorteilhaften, zusätzlichen oder alternativen Ausführungsform ist vorgesehen, dass das Betriebssystem eine Benutzerschnittstelle zum Zugriff auf einzelne oder sämtliche Testfunktionalitäten umfasst. Als Testfunktionalitäten kommen dabei z. B. Trace-Einträge, Testpunkte, Prüfstufen (insbesondere im Hinblick auf Plausibilisierungstiefe/-genauigkeit), definierte Reaktionen auf bestimmte Ausnahmesituationen (z. B. Synchronisationsverlust bei Anlagen mit Redundanz), Debug-Code (und damit Möglichkeit zu zumindest lesenden Zugriff auf davon umfasste Daten des Betriebssystems), etc. in Betracht. Eine solche Benutzerschnittstelle ist insbesondere integraler Bestandteil einer dem Automatisierungsgerät zugehörigen Projektier- und Programmier-Software und wird an deren Anwenderoberfläche abgebildet, was den Vorteil einer durchgängigen Benutzerführung ("Look&Feel") hat.

Eine Möglichkeit zur Zugänglichmachung der Testfunktionalitäten besteht in deren Abbildung auf ein zentrales, dem Automatisierungsgerät zugeordnetes Objekt, bei Automatisierungsgeräten mit der Step5/Step7-Oberfläche der Anmelderin, z. B. dem so genannten Systemdatenservicebaustein. Bei einem Zugriff auf das Automatisierungsgerät mit einem zu dessen Programmierung vorgesehenen Programmiergerät stehen dieser Systemdatenservicebaustein, der im Wesentlichen dem oben erwähnten Systemdatenspeicher entspricht, und die davon umfassten Systemdaten zumindest für einen lesenden Zugriff zur Verfügung. Eine Zugriffsmöglichkeit besteht dabei sowohl für einen Benutzer des Programmiergeräts als auch von Seiten der Automatisierungslösung, also während des laufenden Betriebs.

Für eine Zugriffsmöglichkeit eines Benutzers des Programmiergeräts ist dabei insbesondere vorgesehen, dass in der Projektiersoftware, vorzugsweise in einem zur so genannten Hardwarekonfiguration vorgesehenen Funktionsabschnitt, eine statische Einstellung einzelner als Systemdaten realisierter Parameter möglich ist (z. B. eine Trace-Tiefe).

Für eine Zugriffsmöglichkeit von Seiten der Automatisierungslösung sind spezielle Systemfunktionen (SFC) vorgesehen, die ein Lesen, insbesondere ein Lesen und Schreiben, der Systemdaten ermöglichen. Damit wird eine Möglichkeit zur ablaufgesteuerten Einstellung einzelner Systemdaten (z. B. erhöhte Trace-Tiefe nur im Zusammenhang mit bestimmten Funktionen) realisiert.

Ebenso wie die oben skizzierte Lösung entsprechend dem unabhängigen Vorrichtungsanspruch wird die oben genannte Aufgabe auch entsprechend dem unabhängigen Verfahrensanspruch gelöst. Dazu ist bei einem Verfahren zum Betrieb eines Automatisierungsgerätes der oben genannten Art vorgesehen, dass das Betriebssystem integrierte Testfunktionalitäten umfasst und dass einzelne Testfunktionalitäten entweder aus der Automatisierungslösung mittels dafür vorgesehener Programmcodeanweisungen oder über eine dem Betriebssystem zugeordnete Benutzerschnittstelle als Reaktion auf entsprechende Benutzereingaben aufgerufen werden.

Analog zu der zuvor oben beschriebenen Vorrichtung ist auch bei dem korrespondierenden Betriebsverfahren vorteilhaft vorgesehen, dass dem Betriebssystem ein Systemdatenspeicher mit Systemdaten zugeordnet ist und eine Ausführung einer Testfunktionalität und/oder sonstiger Funktionalitäten des Betriebssystems in diesen jeweils zugeordneten Systemdaten protokolliert wird, wobei eine aus der Automatisierungslösung aufgerufene Testfunktionalität das Automatisierungsgerät in einen durch die jeweilige Testfunktionalität definierten Status überführt und mit Erreichen des definierten Status protokollierte Systemdaten, insbesondere die beim Ausführen der Testfunktionalität protokollierten Systemdaten, über die Benutzerschnittstelle zur Auswertung zur Verfügung stehen. Darüber hinaus ist bei dem Betriebsverfahren z. B. vorteilhaft vorgesehen, dass ein Aufruf einer Testfunktionalität eine Protokollierung von von der Automatisierungslösung und/oder dem Betriebssystem aufgerufenen Funktionen aktiviert, wobei eine Größe eines für eine derartige Protokollierung verwendbaren Teils des Speichers, insbesondere der Systemdaten im Zusammenhang mit dem Aufruf der Testfunktionalität vorgegeben wird. Hier zeigt sich die besondere Flexibilität von im Betriebssystem integrierter, bedarfsweise aktivierbarer Testfunktionalität. Mit der Aktivierung kann nämlich auch ein für die Testfunktionalität zu verwendender Speicher/Speicherbereich vorgegeben werden. Die Vorgabe eines Speicherbereichs ist dabei eine Möglichkeit, die Größe eines für eine durch die Testfunktionalität ausgelöste Protokollierung verwendbaren Teils des Speichers bedarfsgerecht einzustellen. Ein und dieselbe Testfunktionalität kann dabei in verschiedenen Situationen z. B. mit unterschiedlichen verwendbaren Speichergrößen aufgerufen werden, um z. B. im Speicher Trace-Einträge zu protokollieren, wenn in einer ersten Situation eine erste Anzahl von Trace-Einträgen (erste Speichergröße) und in einer zweiten Situation eine erhöhte, zweite Anzahl von Trace-Einträgen (zweite, erhöhte Speichergröße) erwartet wird.

Die Erfindung betrifft danach insgesamt auch ein Automatisierungsgerät der vorstehend oder nachfolgend beschriebenen Art mit einem solchen Computerprogrammprodukt, z. B. einem Speicher mit darin/darauf vorgehaltenen/implementierten Programmcodeanweisungen der oben definierten Art, wobei die Automatisierungslösung einen Aufruf einzelner dem Betriebssystem zugeordneter Testfunktionalitäten umfasst.

Der Vorteil der Erfindung und ihrer Ausgestaltungen besteht insbesondere in der Verbesserung von Möglichkeiten zur Fehlerlokalisierung und Fehleranalyse. So steht z. B. die bedarfsweise Nutzung der Testfunktionalitäten für eine "offizielle", also freigegebene, zertifizierte oder sonst wie zugelassene Software zur Verfügung, da, nachdem die Testfunktionalitäten bereits in das Betriebssystem integriert sind, durch deren Nutzung und Aktivierung keinerlei Veränderung an der Software selbst vorgenommen wird. Bisher ggf. vorgenommene Sondergenerierungen von Betriebssystem-Software oder Betriebssystem-Updates können vollständig oder zumindest weitestgehend entfallen. Durch die verbesserten Möglichkeiten zur Fehlerlokalisierung und Fehleranalyse verringern sich Stillstandszeiten des jeweiligen technischen Prozesses, was wiederum zu Kostenvorteilen und damit einer erhöhten Kundenakzeptanz führt. Schließlich ergeben sich auch Kostenvorteile in der Entwicklungsabteilung bei der Produktwartung.

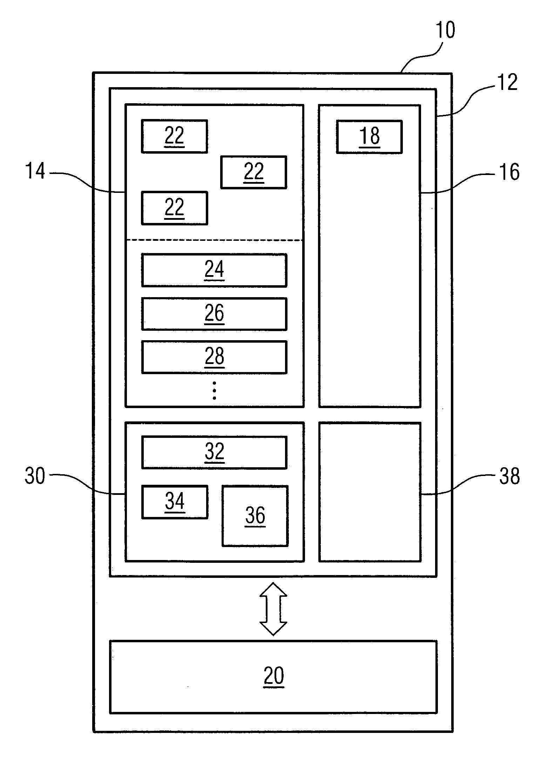

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigt die einzige Figur ein schematisch vereinfachtes Automatisierungsgerät mit einem Speicher, einem darin vorgehaltenen Betriebssystem und diesem zugeordneten aktivierbaren Testfunktionalitäten.

Die Figur zeigt eine schematisch vereinfachte Darstellung eines Automatisierungsgerätes 10, z. B. eine Zentraleinheit einer speicherprogrammierbaren Steuerung. Diese umfasst einen Speicher 12 oder hat in sonst geeigneter, grundsätzlich an sich bekannter Art und Weise Zugriff auf einen Speicher. Der Speicher 12 ist zumindest logisch in einen Codespeicherbereich 12a und einen Datenspeicherbereich 12b unterteilt. In dem Speicher 12, genauer im Codespeicherbereich 12a, ist ein Betriebssystem 14 und als Automatisierungslösung 16 zumindest ein Anwenderprogramm 18 vorgehalten. Zur Ausführung von von dem Betriebssystem 14 oder der Automatisierungslösung 16 umfassten Programmcodeanweisungen ist in an sich bekannter Art und Weise eine Verarbeitungseinheit 20, z. B. ein Prozessor, vorgesehen.

Dem Betriebssystem 14 sind neben anderen von diesem als Basisfunktionen umfassten Funktionalitäten 22 integrierte, aktivierbare Testfunktionalitäten 24, 26, 28 zugeordnet. Im dargestellten Ausführungsbeispiel ist dem Betriebssystem 14 darüber hinaus ein Systemdatenspeicher 30 mit Systemdaten 32, 34, 36 zugeordnet. Eine Ausführung einer Testfunktionalität 24 bis 28 und/oder sonstiger Funktionalitäten 22 des Betriebssystems 14 ist dann z. B. in solchen Funktionalitäten 22; 24 bis 28 jeweils gemäß einer vorgegebenen oder vorgebbaren Zuordnung zugewiesenen Systemdaten 32 bis 36 protokollierbar.

Alternativ oder zusätzlich zu der Protokollierung in Systemdaten 32 bis 36 kann vorgesehen sein, dass die Protokollierung in einem vom Anwender verwalteten Speicher, entsprechend als Anwenderspeicher 38 bezeichnet, erfolgt. Im Anwenderspeicher 38 kann der Anwender z. B. durch Instanziierung von Datenbausteinen einzelne Speicherbereiche 40, 42, 44 belegen, die wie oben oder nachfolgend beschrieben genau wie die Systemdaten 32 bis 36 zur Protokollierung der Ausführung einer Testfunktionalität 24 bis 28 und/oder sonstiger Funktionalitäten 22 des Betriebssystems 14 verwendbar sind. Wenn hier und im Folgenden eine Protokollierung in Systemdaten 32 bis 36 beschrieben wird, kann jederzeit auch, ohne dass dies einer besonderen Erwähnung bedürfte, die Protokollierung in den im Anwenderspeicher 38 belegten oder belegbaren Speicherbereichen 40 bis 44 erfolgen.

Mit der Aktivierbarkeit der in das Betriebssystem 14 integrierten Testfunktionalitäten 24 bis 28 ist deren Aktivierung (oder deren Aufruf) entweder direkt aus der Automatisierungslösung 16 oder über eine Benutzerschnittstelle 46 für einen Zugriff auf das Betriebssystem 14 möglich. Die Benutzerschnittstelle 46 ermöglicht den Zugriff auf grundlegende Funktionen des Betriebssystems 14 und ist insoweit z. B. zur Konfigurierung des Automatisierungsgerätes 10, etwa im Hinblick auf Kommunikationsparameter (Busadresse, etc.) oder angeschlossene Peripherie und dergleichen, vorgesehen. Zum Zugriff auf die vom Betriebssystem 14 umfassten Testfunktionalitäten 24 bis 28 ist die Benutzerschnittstelle 46 erweitert und umfasst z. B. Programmcodeanweisungen für einen Benutzerdialog zur genauen Spezifikation der Aktivierung einer Testfunktionalität 24 bis 28, z. B. im Hinblick auf einen von dieser zu verwendenden Teil des Speichers 12.

Abschließend sollen lediglich kursorisch und ohne Anspruch auf Vollständigkeit einige Szenarien (use-cases) zur Anwendung der vorliegenden Erfindung skizziert werden:
Durch Aktivierung einer dafür vorgesehenen Testfunktionalität 24 bis 28 kann veranlasst werden, dass das Betriebssystem 14 an einem aktivierten Testpunkt "stehen bleibt" (Dauer-Loop). Eine solche Testfunktionalität eignet sich besonders zum Testen einer Netzaus/ein-Sequenz, zum Stoppen einer so genannten AuA-Sequenz (Ankoppeln- und Aufdaten-Sequenz), usw. Zur Realisierung der Testfunktionalität 24 bis 28 kann vorgesehen sein, dass dieser als Parameter zumindest der jeweilige Testpunkt übergeben wird. Alternativ kann auch vorgesehen sein, dass die von einer solchen Testfunktionalität 24 bis 28 umfassten Programmcodeanweisungen direkt einzelnen Testpunkten, also den jeweiligen Codestellen, zugeordnet sind, wobei, solange die Testfunktionalität 24 bis 28 nicht aktiviert ist, diese "übersprungen" wird und eine aktivierte Testfunktionalität 24 bis 28 zu dem oben bereits erwähnten Dauer-Loop führt. Eine zur Realisierung eines solchen Loops vorgesehene, durch Wiederholungsanweisungen oder Sprungbefehle realisierte Schleife kann durch dafür vorgesehene Kommunikationskommandos wieder verlassen werden, deren Vorliegen durch die Testfunktionalität 24 bis 28 innerhalb der Schleife fortwährend geprüft wird. Mit einer solchen Testfunktionalität 24 bis 28 lässt sich ein "punktgenauer" Speicherabzug für nachfolgende Analysen, eine synchrone Auslösung typischerweise asynchroner Unterbrechungen (RUN/STOP, NETZAUS/-EIN), etc. auslösen und testen.

Durch Aktivierung einer dafür vorgesehenen Testfunktionalität 24 bis 28 kann eine Trace-Funktionalität problemspezifisch angepasst werden. Eine erste Testfunktionalität 24 bis 28 kann zum Starten und/oder Stoppen der Trace-Aufzeichnung verwendet werden. Wie bereits oben beschrieben, ist diese entweder einer Codestelle explizit zugeordnet oder die jeweilige Codestelle wird der Testfunktionalität 24 bis 28 als Parameter übergeben. Eine weitere Testfunktionalität 24 bis 28 kann zum Einstellen einer Größe eines Speichers für Trace-Aufzeichnungen (Trace-Buffer) verwendet werden. Eine solche Testfunktionalität 24 bis 28 kann auch eine Funktion zum Anzeigen des insgesamt noch verfügbaren Trace-Buffers umfassen. Darüber hinaus kann mit einer nochmals weiteren Testfunktionalität 24 bis 28 oder innerhalb der oben beschriebenen Testfunktionalitäten 24 bis 28 eine maximale Trace-Tiefe, also eine Anzahl zu protokollierender Trace-Stufen, vorgegeben werden. Die Testfunktionalität 24 bis 28 kann eine Funktion umfassen, bei der bei der Protokollierung der Trace-Einträge diese den jeweiligen Stufen zugeordnet sind, was die Auswertung der Protokollierungsdaten unter Umständen erheblich erleichtert. Es können gleichzeitig mehrere Testfunktionalitäten 24 bis 28, die z. B. modulspezifische Trace-Aufzeichnungen bewirken, aktiv sein und/oder zur Protokollierung den gleichen Speicher(bereich) verwenden. Durch bedarfsgerechte Anpassung der Trace-Tiefe kann sichergestellt werden, dass der verfügbare Speicher ausreicht, z. B. bei einzelnen Testfunktionalitäten 24 bis 28 die Trace-Tiefe zumindest zeitweise auf "Null" eingestellt und die Protokollierung damit quasi abgeschaltet wird. Der dadurch frei werdende Speicher kann von den anderen, gerade aktiven Testfunktionalitäten 24 bis 28 genutzt werden. Durch bedarfsgerechte Aktivierung solcher Testfunktionalitäten 24 bis 28 und Vorgabe einer jeweils notwendigen Trace-Tiefe können fehlerverursachende Funktionen im Betriebssystem 14 und/oder der Automatisierungslösung 16 sehr genau lokalisiert werden. Durch bedarfsgerechte Aktivierung und Deaktivierung solcher Testfunktionalitäten 24 bis 28 können die Trace-Ressourcen ablaufgesteuert konfiguriert werden, so dass z. B. nur ein bestimmter Abschnitt in einem Anwenderprogramm 18 - dafür sehr detailgenau - "getraced" wird.

Durch Aktivierung einer dafür vorgesehenen Testfunktionalität 24 bis 28 können Prüfstufen aktiviert und/oder eingestellt werden. So kann z. B. vorgesehen sein, dass einzelnen Moduln des Betriebssystems Prüffunktionen zugeordnet sind, die grundsätzlich jederzeit aktiv sind, jedoch nur bei Auswahl einer entsprechenden Prüfstufe Prüffunktionen, z. B. Protokollierungen, ausführen. Für solche Testfunktionalitäten 24 bis 28 kann vorgesehen sein, dass im Auslieferungszustand des Betriebssystems eine minimale Prüfstufe, bei der z. B. keinerlei Protokollierungen oder nur eine Minimalplausibilisierung erfolgen bzw. erfolgt, vorgewählt ist. Zur Fehlersuche und -lokalisierung werden die Prüfstufen bedarfsweise erhöht, so dass sich mit zunehmend höherer Prüfstufe detailliertere Protokollierungen ergeben. Durch eine vergleichsweise niedrige Einstellung von Prüfstufen in einem ersten Modul und eine vergleichsweise hohe Einstellung von Prüfstufen in einem anderen Modul lässt sich eine günstige Nutzung zur Verfügung stehender Ressourcen, insbesondere Speicher, erreichen. Als weiteres Beispiel für Prüffunktionen lassen sich z. B. die Automatisierungsgeräte 10, die eine so genannte Kachelkommunikation über einen Dual Port RAM abwickeln, als Testfunktionalität 24 bis 28 z. B. im dafür vorgesehenen Treiber, also einer Funktion des Betriebssystems 14, für Prüfstufen größer Null erweiterte Plausibilitätsprüfungen im Hinblick auf Kachelbelegfunktionen, z. B. ob dieselbe Kachel bereits im Leerpool ist, implementieren. Evtl. Fehler, z. B. ein doppeltes Einketten ein und derselben Kachel, werden so direkt erkannt und die Gefahr, dass der Fehler verschleppt wird und zu Folgefehlern führt, ist vermieden.

Durch Aktivierung einer dafür vorgesehenen Testfunktionalität 24 bis 28 kann bei Automatisierungsgeräten 12, die mit mindestens einem weiteren gleichen oder gleichartigen Automatisierungsgerät zu einem redundanten, hochverfügbaren oder fehlersicheren Automatisierungssystem zusammengeschlossen sind, eine Reaktion auf einen etwaigen so genannten Synchronisationsverlust vorgegeben werden. Mögliche Alternativen für Reaktionen in einer solchen Situation sind: 0 = Reserve-CPU geht in STOP, Master-CPU läuft weiter (Default); 1 = verursachende CPU geht in STOP, nicht verursachende CPU läuft weiter; 2 = beide CPU gehen in STOP; 3 = beide CPU gehen in DEFEKT (STOP und DEFEKT bezeichnen für die Automatisierungsgeräte definierte, vorgegebene oder vorgebbare Systemzustände). Insbesondere wenn durch Aktivierung der Testfunktionalität 24 bis 28 veranlasst wird, dass im Falle eines Synchronisationsverlusts beide Automatisierungsgeräte in den Systemzustand DEFEKT wechseln, lässt sich die Ursache für den Synchronisationsverlust befehlsgenau ermitteln.

Als Testfunktionalität 24 bis 28 kann auch ein Testbaustein (Debug-SFC) geladen werden, der erst im Ladezeitpunkt Bestandteil des Betriebssystems 14 wird und fehlerspezifische Funktionen ausführt, z. B. fehlerrelevante Werte von globalen, vom Betriebssystem 14 verwendeten Variablen abspeichert und/oder spezielle Plausibilisierungen (Debug-Code) umfasst. Damit ist z. B. eine befehlsgranulare Aufzeichnung von fehlerrelevanten "Variablen-Snapshots" der jeweils aufrufenden Funktionalität, z. B. in einem für einen Instanz-DB (DB = Datenbaustein) allozierten oder allozierbaren Speicherbereich 40 bis 44, möglich. Der jeweilige Instanz-DB wird dem Testbaustein, wie bei SFCs üblich, zugeordnet und fungiert als dessen lokaler Datenbereich. Dieser Aspekt einer der Ausgestaltungen der Erfindung macht in Bezug auf das Betriebssystem 14 erfasste oder erfassbare Daten direkt außerhalb des Betriebssystems 14, nämlich im Anwenderspeicher 38 zugänglich. Zusätzlich oder alternativ können mit vorgegebenem oder vorgebbarem Debug-Code der Problemsituation angepasste Plausibilisierungen ausgeführt werden, um Fehlerursachen zu lokalisieren.

Damit lässt sich die Erfindung kurz wie folgt darstellen:
Es wird ein Automatisierungsgerät mit einer Verarbeitungseinheit 20, einem Speicher 12, einem in dem Speicher 12 vorgehaltenen und durch die Verarbeitungseinheit 20 ausführbaren Betriebssystem 14 und einer in den Speicher 12 ladbaren, ebenfalls durch die Verarbeitungseinheit 20 ausführbaren Automatisierungslösung 16 sowie ein korrespondierendes Verfahren zu dessen Betrieb angegeben, wobei eine Ausführung der Automatisierungslösung 16 je nach davon umfassten Programmcodeanweisungen einen Aufruf einzelner Funktionalitäten des Betriebssystems 14 umfasst und wobei dem Betriebssystem 14 integrierte, aktivierbare Testfunktionalitäten 24, 26, 28 zugeordnet sind.

## Patentansprüche

1. Automatisierungsgerät mit einer Verarbeitungseinheit (20), einem Speicher (12), einem in dem Speicher (12) vorgehaltenen und durch die Verarbeitungseinheit (20) ausführbaren Betriebssystem (14) und einer in den Speicher (12) ladbaren, ebenfalls durch die Verarbeitungseinheit (20) ausführbaren Automatisierungslösung (16),
wobei eine Ausführung der Automatisierungslösung (16) je nach davon umfassten Programmcodeanweisungen einen Aufruf einzelner Funktionalitäten des Betriebssystems (14) umfasst,
**dadurch gekennzeichnet, dass**
dem Betriebssystem (14) integrierte, aktivierbare Testfunktionalitäten (24, 26, 28) zugeordnet sind.

2. Automatisierungsgerät nach Anspruch 1,
wobei dem Betriebssystem (14) ein Systemdatenspeicher (30) mit Systemdaten (32, 34, 36) zugeordnet ist und eine Ausführung einer Testfunktionalität (24, 26, 28) und/oder sonstiger Funktionalitäten (22) des Betriebssystems (14) in diesen jeweils zugeordneten Systemdaten (32, 34, 36) protokollierbar ist.

3. Automatisierungsgerät nach Anspruch 1 und 2,
wobei einzelne oder sämtliche Testfunktionalitäten (24, 26, 28) über die Automatisierungslösung (16) aktivierbar und protokollierte Systemdaten (32, 34, 36), insbesondere im Rahmen einer Ausführung aktivierter Testfunktionalitäten (24, 26, 28) protokollierte Systemdaten (32, 34, 36), der Automatisierungslösung (16) zumindest für einen lesenden Zugriff zugänglich sind.

4. Automatisierungsgerät nach einem der vorangehenden Ansprüche, wobei in einem vom Speicher umfassten Anwenderspeicher (38) Speicherbereiche (40, 42, 44) gebildet oder bildbar sind,
wobei zumindest ein derartiger Speicherbereich (40 bis 44) einer Testfunktionalität (24, 26, 28) und/oder sonstigen Funktionalitäten (22) des Betriebssystems (14) zuordenbar ist und eine Ausführung einer Testfunktionalität (24, 26, 28) und/oder sonstiger Funktionalitäten (22) des Betriebssystems (14) in den zugeordneten Speicherbereich (40 bis 44) protokollierbar ist.

5. Automatisierungsgerät nach einem der vorangehenden Ansprüche, wobei das Betriebssystem (14) eine Benutzerschnittstelle (46) zum Zugriff auf einzelne oder sämtliche Testfunktionalitäten (24, 26, 28) umfasst.

6. Verfahren zum Betrieb eines Automatisierungsgerätes nach dem Oberbegriff des Anspruchs 1,
**dadurch gekennzeichnet,**
**dass** das Betriebssystem (14) integrierte Testfunktionalitäten (24, 26, 28) umfasst und
**dass** einzelne Testfunktionalitäten (24, 26, 28) entweder aus der Automatisierungslösung (16) mittels dafür vorgesehener Programmcodeanweisungen oder über eine dem Betriebssystem (14) zugeordnete Benutzerschnittstelle (46) als Reaktion auf entsprechende Benutzereingaben aufgerufen werden.

7. Betriebsverfahren nach Anspruch 6,
wobei dem Betriebssystem (14) ein Systemdatenspeicher (30) mit Systemdaten (32, 34, 36) zugeordnet ist und eine Ausführung einer Testfunktionalität (24, 26, 28) und/oder sonstiger Funktionalitäten (22)-des Betriebssystems (14) in diesen jeweils zugeordneten Systemdaten (32, 34, 36) protokolliert wird,
wobei eine aus der Automatisierungslösung (16) aufgerufene Testfunktionalität (24, 26, 28) das Automatisierungsgerät in einen durch die jeweilige Testfunktionalität (24, 26, 28) definierten Status überführt und mit Erreichen des definierten Status protokollierte Systemdaten (32, 34, 36), insbesondere die beim Ausführen der Testfunktionalität (24, 26, 28) protokollierten Systemdaten (32, 34, 36), über die Benutzerschnittstelle zur Auswertung zur Verfügung stehen.

8. Betriebsverfahren nach Anspruch 6 oder 7,
wobei ein Aufruf einer Testfunktionalität (24, 26, 28) eine Protokollierung von von der Automatisierungslösung (16) und/oder dem Betriebssystem (14) aufgerufenen Funktionen aktiviert, wobei eine Größe eines für eine derartige Protokollierung verwendbaren Teils des Speichers (12), insbesondere der Systemdaten (32, 34, 36) im Zusammenhang mit dem Aufruf der Testfunktionalität (24, 26, 28) vorgegeben wird.

9. Betriebsverfahren nach Anspruch 6, 7 oder 8,
wobei in einem vom Speicher umfassten Anwenderspeicher (38) Speicherbereiche (40, 42, 44) gebildet sind, wobei zumindest ein derartiger Speicherbereich (40 bis 44) einer Testfunktionalität (24, 26, 28) und/oder sonstigen Funktionalitäten (22) des Betriebssystems (14) zugeordnet wird
und eine Ausführung einer Testfunktionalität (24, 26, 28) und/oder sonstiger Funktionalitäten (22) des Betriebssystems (14) in den zugeordneten Speicherbereich (40 bis 44) protokolliert wird.

10. Computerprogramm mit durch einen Computer ausführbaren Programmcodeanweisungen zur Implementierung des Betriebsverfahrens nach einem der Ansprüche 6 bis 9, wenn das Computerprogramm auf einem Computer ausgeführt wird.

11. Computerprogrammprodukt, insbesondere Speichermedium, mit einem durch einen Computer ausführbaren Computerprogramm gemäß Anspruch 10.

12. Automatisierungsgerät nach einem der Ansprüche 1 bis 5 mit einem Computerprogrammprodukt nach Anspruch 11 oder in dem Speicher (12) implementierten Programmcodeanweisungen nach Anspruch 10, wobei die Automatisierungslösung (16) einen Aufruf einzelner dem Betriebssystem (14) zugeordneter Testfunktionalitäten (24, 26, 28) umfasst.
